# EUROPÄISCHE PATENTANMELDUNG

(11) **EP 2 354 778 A1**
(43) Veröffentlichungstag der Anmeldung: **10.08.2011**
(21) Anmeldenummer: 11152089.6
(22) Anmeldetag: 25.01.2011
(51) Int. Cl.: G01M 17/007

(54) **Verfahren zum Testen eines Fahrzeuges oder eines Teilsystems davon**

(30) Priorität: 04.02.2010 AT 682010
(71) Anmelder: AVL List GmbH, 8020 Graz (AT)
(72) Erfinder: Rzehorska, Martin, 8120, Peggau (AT); Kutschi, Klaus, 8020, Graz (AT); Teichmann, Rüdiger, A-8075, Hart. b. Graz (AT); Wanker, Roland, 8075, Hart bei Graz (AT)
(74) Vertreter: Laminger, Norbert

(57) **Zusammenfassung**

Ein Verfahren zum Testen eines Fahrzeuges oder eines Teilsystems davon auf einem Prüfstand oder im Fahrversuch wird beschrieben, bei welchem kraft- und momentenübertragende Schnittstellen zumindest teilweise real vorhanden sind.

Um die Flexibilität von Prüfläufen bzw. Prüffahrten weiter steigern zu können, wird unabhängig von diesen Schnittstellen zumindest ein weiteres Teilsystem oder eine nicht real vorhandene Komponente über ein Simulationsprogramm nachgebildet, welches mit realen, aktuellen Messwerten und/oder Signalen des realen Teils versorgt wird, wobei die Ausgangssignale des Simulationsmodells einem Steuergerät des realen Teils zur weiteren Verarbeitung zugeführt werden.

## Beschreibung

Die Erfindung betrifft ein Verfahren zum Testen eines Fahrzeuges oder eines Teilsystems davon auf einem Prüfstand oder im Fahrversuch, bei welchem kraft- und momentenübertragende Schnittstellen zumindest teilweise real vorhanden sind.

In der Entwicklung von Fahrzeugen haben Test auf Prüfständen und auch Fahrversuche auf Teststrecken bzw. im realen Fahrbetrieb große Bedeutung. Im Rahmen dieser Tests und Fahrversuche wird vielfach durch den Einsatz von Simulationen die Flexibilität wesentlich erhöht, so dass viele Möglichkeiten entstehen, um Entwicklungszyklen zu verkürzen und auch die Produktqualität zu steigern. So sind Softwarepakete verfügbar, die mit detaillierten, substituierbaren System- und Komponentenmodellen das Zusammenspiel von Fahrzeug, Fahrer, Reifen, Fahrbahn, Verkehr und Umgebungsbedingungen simulieren. In Simulationssystemen werden oft auch bestimmte Fahrzeugkomponenten detailliert modelliert.

Die Aufgabe der vorliegenden Erfindung war ein Verfahren, mit welchem die Flexibilität von Prüfläufen bzw. Prüffahrten weiter gesteigert werden kann.

Zur Lösung dieser Aufgabe ist das Verfahren dadurch gekennzeichnet, dass unabhängig von diesen Schnittstellen zumindest ein weiteres Teilsystem oder eine nicht real vorhandene Komponente über ein Simulationsprogramm nachgebildet wird, welches mit realen, aktuellen Messwerten und/oder Signalen des realen Teils versorgt wird, wobei die Ausgangssignale des Simulationsmodells einem Steuergerät des realen Teils zur weiteren Verarbeitung zugeführt werden.

Gemäß einer vorteilhaften Ausführungsform kann weiters vorgesehen sein, dass nicht vorhandene Sensorfunktionen über ein Simulationsmodell nachgebildet und die Ausgangssignale des Simulationsmodells als Sensorwerte an den realen Teil rückgeführt werden.

Um Rückwirkungen des simulierten Teilsystems bzw. der simulierten Fahrzeugkomponente darstellen zu können, sieht eine vorteilhafte Variante der Erfindung vor, dass die Ausgangssignale des Simulationsmodells zumindest einem Aktuator zur Beeinflussung des realen Teils zugeführt werden.

Vorzugsweise wird in dieser Variante weiters vorgesehen, dass die Rückwirkungen des nicht verbauten Teilsystems oder der nicht real vorhandenen Komponente auf das reale System durch zumindest einen zusätzlichen Aktuator simuliert werden, wobei die Stellwerte für den oder jeden Aktuator aus den Ausgangssignalen des Simulationsmodells ermittelt werden.

In der nachfolgenden Beschreibung soll die Erfindung anhand von Beispielen näher erläutert werden.

Die gegenständliche Erfindung basiert auf dem Einsatz von rechnergestützten Simulationsmethoden und Simulationsmodellen, die in Echtzeit oder Quasiechtzeit beispielsweise in einem Versuchsfahrzeug zur Anwendung kommen. Durch Simulationsmodelle können nun verschiedenste nicht real verbaute Hardwarekomponenten in allen möglichen Ausführungen und Zuständen in das reale Fahrzeug integriert werden. So können Fahrzeuge simulativ mit Komponenten wie Partikelfiltern, SCR Katalysatoren, Ammoniak Slip Sonden, Lambda Sonden, NOx Speicherkatalysatoren, usw. ausgestattet werden.

Als Eingangsgrössen stehen den Simulationsmodellen dabei entweder tatsächliche physikalische Messwerte oder Daten aus einem der Steuergeräte des Fahrzeuges zur Verfügung. Sensorwerte können vom Motor, Antriebsstrang, Getriebe, GPS, Abgas, Umgebung, Akustik, etc. erhalten werden.

Nicht vorhandene Sensorfunktionen können natürlich auch über ein Simulationsmodell nachgebildet und die Ausgangssignale des Simulationsmodells als Sensorwerte an das real vorhandene Fahrzeug rückgeführt werden. Diese umfasst die Simulation von Sensorfunktionen welche physikalisch vorhanden sind oder nicht vorhanden sein können. Durch die Vorgabe definierter Fehlermuster und Fehlfunktionen ist einerseits die Diagnose von Stellgliedern im Rahmen der On-Board-Diagnose (OBD) möglich. Auch kann der Einfluss defekter Komponenten auf Entwicklungszielgrößen (z.B. Einfluss eines defekten Saugrohrtemperatursensors auf Rollentestergebnis) frühzeitig und mit geringem Aufwand simuliert werden.

Die Steuergeräte hingegen liefern der Simulation Daten über beispielsweise Fahrzustand, Beladung, Regenerationskoordinator, Schaltmodus, Driveability, OBD, usw.

Die Ausgangssignale des Simulationsmodells wiederum können entweder in einem Steuergerät des realen Teils weiter verarbeitet werden oder können als Stellgröße für Aktuatoren dienen, um Rückwirkungen des simulierten Teilsystems bzw. der simulierten Fahrzeugkomponente darstellen zu können. Dies kann im realen Fahrzeug ohnedies vorhandene oder auch im Rahmen des Simulationsversuchs zusätzlich eingebaute Aktuatoren betreffen. Zum Beispiel ist es für die physikalisch repräsentative Simulation eines real nicht vorhandenen Dieselpartikelfilters nötig, den Abgasgegendruck mit Hilfe einer entsprechenden mechanischen Vorrichtung einzustellen.

## Patentansprüche

1. Verfahren zum Testen eines Fahrzeuges oder eines Teilsystems davon auf einem Prüfstand oder im Fahrversuch, bei welchem kraft- und momentenübertragende Schnittstellen zumindest teilweise real vorhanden sind, **dadurch gekennzeichnet, dass** unabhängig von diesen Schnittstellen zumindest ein weiteres Teilsystem oder eine nicht real vorhandene Komponente über ein Simulationsprogramm nachgebildet wird, welches mit realen, aktuellen Messwerten und/oder Signalen des realen Teils versorgt wird, wobei die Ausgangssignale des Simulationsmodells einem Steuergerät des realen Teils zur weiteren Verarbeitung zugeführt werden.

2. Verfahren nach Anspruch 1, **dadurch gekennzeichnet, dass** nicht vorhandene Sensorfunktionen über ein Simulationsmodell nachgebildet und die Ausgangssignale des Simulationsmodells als Sensorwerte an den realen Teil rückgeführt werden.

3. Verfahren nach Anspruch 1 oder 2, **dadurch gekennzeichnet, dass** die Ausgangssignale des Simulationsmodells zumindest einem Aktuator zur Beeinflussung des realen Teils zugeführt werden.

4. Verfahren nach Anspruch 3, **dadurch gekennzeichnet, dass** die Rückwirkungen des nicht verbauten Teilsystems oder der nicht real vorhandenen Komponente auf das reale System durch zumindest einen zusätzlichen Aktuator simuliert werden, wobei die Stellwerte für den oder jeden Aktuator aus den Ausgangssignalen des Simulationsmodells ermittelt werden.
